# EUROPEAN PATENT SPECIFICATION

(11) **EP 4 590 575 B1**
(45) Date of publication and mention of the grant of the patent: **24.06.2026**
(21) Application number: 23783497.3
(22) Date of filing: 22.09.2023
(51) Int. Cl.: B63B 21/50, F03D 13/25, B63B 1/12, B63B 35/44

(54) **SEMI-SUBMERSIBLE TRIMARAN FLOATING OFFSHORE WIND VESSEL WITH TURRET MOORING**
HALBTAUCHFÄHIGES TRIMARAN SCHWIMMENDE OFFSHORE WINDANLAGESCHIFF MIT VERANKERUNGSTURM
VAISSEAU TRIMARAN SEMI-SUBMERSIBLE PORTANT UNE ÉOLIENNE OFFSHORE FLOTTANTE AVEC TOURELLE D'AMARRAGE

(30) Priority: 23.09.2022 GB 202213933
(43) Date of publication of application: 30.07.2025
(73) Proprietor: Trivane Ltd, Newquay Cornwall TR7 2FP (GB)
(72) Inventor: MARTIN, Richard Stewart Whittle, Newquay Cornwall TR7 2FP (GB); MORTOLA, Giuseppe, Newquay Cornwall TR7 2FP (GB)
(74) Representative: Definition IP Limited
(86) International application number: PCT/GB2023/052460
(87) International publication number: WO 2024/062257

(56) References cited:
- DE-A1- 102014 109 212
- GB-A- 2 595 521
- JP-A- 2010 247 646

## Description

The present invention relates to a floating offshore wind (FOW) vessel for supporting a single wind turbine for the generation of electricity from wind. The vessel has a trimaran hull with the mid part of the centre hull being partially above water during assembly in port and during tow out from port on its own buoyancy. The vessel is ballasted down when offshore so that the mid part of the centre hull is underwater whilst operating moored offshore, so that it becomes a semi-submersible. The floating vessel is used in conjunction with a mooring system that permits the floating vessel to weathervane in order to head the vessel into the prevailing seas, so that all three hulls can be ship-shaped in form, which reduces loads in the mooring system. The hulls are made from stiffened flat plates, these components being easier for many yards and fabrication shops to make, compared to cylindrical hulls, thus making them cheaper.

The mounting structure of a conventional offshore wind turbine is referred to in the wind industry as a tower. Such a tower is a vertical hollow column of varying cross-sectional profile, sometimes with a lattice structure beneath it. Such mounting structures are normally installed in water depths of up to thirty metres and occasionally more. It is presently considered that the theoretical and practical limit for installing these fixed structures is a water depth of around fifty metres. If the water depth is greater than around thirty metres then a floating structure can alternatively be used to support the wind turbine. Another consideration is the suitability of the nature of the seabed. The tower of a fixed wind turbine is normally mounted on a large pile driven into the seabed, but in some locations the tower needs to be inserted into a socket that is bored into rock, or else mounted on a concrete gravity base, either solution being costly. On the other hand, some floating structures, including the one in this invention, are restrained by mooring lines that are fixed to the seabed using embedment anchors, or suction anchors, or driven piles that only carry horizontal load. These are less costly to provide and install, compared to a gravity base or to boring a socket to receive a tower of large diameter, and so this consideration may then favour selection of a floating vessel instead of a fixed installation.

Wind turbines used for the generation of electricity on a large scale are very large and heavy. A 10MWwind turbine will typically have blades that are each 90m in length and the Towerhead Mass of the wind turbine, including the blades, generator, and gearbox would be in the region of 500 to 670 tonnes. The support structure for the wind turbine, including the tower is accordingly also very large, as is the floating vessel upon which the wind turbine support structure and the wind turbine are mounted. The size of the wind turbine support structure and the size of the floating vessel pose many challenges, including being able to manufacture and install them at a reasonable cost, so that electricity is generated at a cost that is competitive, relative to other methods of generating electricity. The floating vessel and the turbine support structure must meet these cost challenges, whilst still being capable of withstanding the loads exerted by the wind on the wind turbine and the loads exerted by the sea on the floating vessel. Consequently, a structurally efficient arrangement must be employed.

In the offshore oil and gas sector, it was found that crane barges having semi-submersible hulls had significantly lower motions in seas, compared to barges with ship-shaped hulls. In the same way, most floating drilling rigs have semi-submersible hulls, having lower motions in seas, compared to drill ships. In both cases, low motions are desirable. A vessel that supports a wind turbine must also have low motions in seas because the wind turbine and its blades cannot accept high motions or angles of inclination. Hence many of the wind turbine vessels that are proposed for offshore use or that are in use offshore have hulls of semi-submersible design. All these three types of floating vessel are stationary during operations.

A key reason for the motions of semi-submersibles being lower relates to their hydrodynamic performance. The hull of any non-submerged floating vessel pierces through the still water level. This area, seen on plan, for example at the surface of a sea, is the cut waterplane area. As a wave passes the floating vessel it causes variations in the distribution of buoyancy of the vessel, and these variations induce vessel motions. These variations are lower if the cut waterplane area is lower, as is the case if the vessel has a semi-submersible hull.

Most types of vessel, for example cargo ships and ferries, must move forwards at an acceptable speed. For these types of vessel speed becomes a more important design consideration compared to vessel motions. Semi-submersible hulls tend to have high drag, meaning that they are not streamlined and cannot move forwards quickly. So vessels that require an acceptable forward speed have ship-shaped hulls.

If the floating vessel is moored and stationary it remains desirable that drag on the hull, during the passage of waves, is minimised because high drag leads to high loads in the mooring system and consequent increased cost of the system. Most floating wind vessels in operation today have hulls consisting of vertical cylinders and these have high drag. This invention has the joint advantages of having a semi-submersible hull, but with each of the vertical parts of the hull being ship-shaped in form so that drag is reduced and loads in the mooring system are reduced, during the passage of waves. This is made possible by providing a turret mooring system so that the floating vessel heads into the prevailing seas.

GB2595521 discloses a floating vessel with a wind turbine support comprising three buoyant bodies and a geostationary mooring that permits the vessel to weathervane. The wind turbine support comprises a central support element attached to a central buoyant body, a first side brace attached to a first buoyant body and a second side brace attached to a second buoyant body.

DE102014109212 discloses a floating vessel with a downwind wind turbine. It comprises a floating foundation with three legs which are arranged in a Y-configuration, with one of the legs longer than the other two. A tower is fixed to the floating foundation and a wind turbine is attached to the tower.

JP2010247646 discloses a floating vessel with a central hull and a side hull on each side of the central hull which are each attached to the central hull using a bracing arrangement. A wind turbine tower that supports a wind turbine is attached to the central hull.

Accordingly, the present invention provides in a first aspect a floating structure for supporting a horizontal axis wind turbine supported on a wind turbine tower, the floating structure comprising, a central buoyant body, a first buoyant body located on one side of the central buoyant body and a second buoyant body located on the other side of the central buoyant body, wherein at least a part of the central buoyant body is interposed between the first buoyant body and the second buoyant body, a bracing arrangement that connects the first buoyant body to the central buoyant body and that connects the second buoyant body to the central buoyant body, wherein the bracing arrangement acts to hold the first buoyant body and the second buoyant body away from the central buoyant body in order to create a flow passageway between each of the first buoyant body and the second buoyant body and the central buoyant body, a turbine tower support structure that is located within the aft half of the length of the floating structure, and a forecastle located at the fore end of the central buoyant body, wherein at least a part of each of the first buoyant body, the second buoyant body and the forecastle extend above the central buoyant body, the central buoyant body further comprising a mooring attachment that is located within the fore half of the length of the floating structure and that is suitable for attachment to a geostationary mooring, wherein, in use, the central buoyant body, the first buoyant body, the second buoyant body and the forecastle can be lowered or raised relative to the waterline and wherein when the floating structure is moored for the purposes of facilitating operation of the wind turbine, the central buoyant body is located below the waterline and the tower support structure and at least a part of each of the forecastle, the first buoyant body and the second buoyant body are located above the waterline.

It is advantageous to use an arrangement of three buoyant bodies, for example in the form of a trimaran, because it facilitates a reduction in the overall volume of the vessel. If the overall volume of the vessel can be reduced, then the cost of construction can be reduced. If the wind turbine were to be supported on a single buoyant body, for example a single ship-shaped barge, then the beam of that barge would need to be much larger than the beam of the central buoyant body of the present invention, in order to provide adequate transverse stability, and that would increase the hull cost. There are other disadvantages associated with a hull having a large beam. Such a hull would have greater heave and pitch responses and the wave forces transferred to the mooring would be greater, increasing mooring line loads and thus increasing the cost of the mooring. A two hulled vessel, for example a catamaran, would need a large and expensive framework on its bow to support a geostationary mooring system. That framework would only serve the purpose of supporting the mooring and thus would reduce the structural efficiency of the vessel as a whole.

Minimising the beam of a buoyant body increases its transparency to incident waves. This is beneficial because it reduces heave and pitch, which is important for a vessel supporting a wind turbine, and it also minimises mooring line loads thus reducing costs.

In the present invention the central buoyant body of the floating vessel is designed such that a part or portion of it is submerged below the water. Arranged thus, the structure that supports the tower pierces through the surface of the water and a forward part of the central buoyant body, referred to as the forecastle, also pierces through the surface of the water. There are thus four parts of the floating vessel piercing the surface of the water, namely the first buoyant body, the tower support, the forecastle and the second buoyant body. The combination of the total plan areas that pierce the water is called the cut waterplane area.

In naval architectural parlance: (i) motions of a vessel in the fore and aft direction are called pitch; (ii) a static angle relative to level in the fore and aft direction is called trim or tilt; (iii) motions in the transverse direction are called roll; (iv) a static transverse angle relative to level is called list; and (v) motions in the vertical plane are called heave.

Floating vessels that support one or more wind turbines must have sufficient stability to limit tilt and list under the forces that may be applied to it. A major force is the thrust applied by the wind turbine at the top of the tower. There are also the vertical component of loads in the various components of the mooring system, which apply vertical loads to the vessel. Static stability calculations are carried out to determine the trim and list under different conditions, and the results must not exceed certain values. There are also calculations that typically consider the possible forces on the vessel, and the consequent trim and/or list, in the event that one or more of the compartments of the vessel accidentally become totally or partially flooded. Such calculations are known as damage stability calculations.

In the present invention the presence of the forecastle, together with the combination of the tower support and the two outer buoyant bodies, combine to limit the trim that could occur to the vessel and hence they limit the inclination of the turbine tower, in any combination of factors or events to which the floating vessel might be subjected in operation. In the transverse direction the two outer hulls maintain the list within allowable limits.

Another major consideration in the design of floating vessels that support wind turbines is to limit motions that can occur under combined wind, wave and current conditions. The waves that are experienced by the vessel have various heights and periods or frequencies, these being a measure of the duration between the passage of the wave crests. In open water these are not regular waves, but combinations of waves of various heights and periods. These combinations are numerically defined as sea-states that contain combinations of waves of different heights with various frequencies or periods.

In general, floating vessels that support wind turbines must not pitch or roll by more than a certain amount in the maximum sea-state that they could encounter at any particular location at which they are moored. There are allowable limits of dynamic roll and pitch, and also static list or trim, which must not be exceeded, as specified by the providers of the wind turbine and its tower. Sea-states of a given height can have different periods or frequencies. At any one mooring location a key figure is the maximum significant height (Hs) of the sea-state that could occur, together with its peak period (Tp) which is a measure of the longest period that such a sea-state could have. Calculations of the predicted motions of the vessel in such a sea-state are carried out, these being called motion response calculations. The results are sometimes confirmed using physical model tests

In order to optimise the design of the device that supports the wind turbine it is best that the natural periods of roll, pitch and heave do not correspond with any of the periods of the seas to which the vessel may be subjected.

In the present invention this is achieved using one or more of the following measures: (i) by submerging the central portion of the central buoyant body; (ii) by submerging the central portion of the central buoyant body by a sufficient vertical distance below the surface of the water; (iii) by providing plates that are secured to the central and outer buoyant bodies; (iv) by optimising the overall length of the vessel; and/or (v) by optimising the overall beam of the vessel.

In relation to the provision of plates, such plates are called heave plates or entrapment plates. They inhibit vertical motions of the buoyant body because their presence forces the water above the plates to move up, and the water below the plates to move down, when wave and wind forces, acting on the vessel, make the plates move. The weight of the water moved by the entrapment plates is called the added mass.

The use of one or more of these measures in the floating vessel of the present invention, ensures that the natural periods of roll and pitch of the vessel exceed the natural periods of the possible incident sea-states and hence the responses of the vessel to sea-states are low.

A further advantage of the present invention is that, apart from the shaped transition piece beneath the turbine tower, it is fabricated from stiffened flat plate and some simple tubes. These are easier and cheaper to fabricate compared to cylindrical structures of large diameter.

During assembly of the vessel inshore, it floats at a relatively low draft, with the entire hull of the central buoyant body above water. This low draft has the beneficial effects that: (i) assembly is possible at most ports without special provisions such as dredging; (ii) towing away of the vessel from the port, for example down a channel to open water is also possible without special provision such as dredging of the channel; (iii) the resistance to towing is low because only a small part of the vessel is underwater - this reduces towing line loads and increases towing speed, thus reducing costs and decreasing exposure to risks, for example because the time taken for the towing phase can be reduced relative to prior art methods.

Like many other vessels that support a wind turbine, the vessel in the present invention has a large length, beam and weight. Dry docks are typically not wide enough to accommodate them and nor are slipways. In order to make it easier to build and assemble, the present invention envisages that the central buoyant body can if required be built in two parts. The aft part, together with the first and second buoyant bodies, or perhaps the lower parts of them, is moved into the water. This can either be done by lifting this assembly, or by floating it out of dry dock or by launching it down a slipway. The fore part is then moved into the water similarly. The invention allows that the fore and aft parts of the central buoyant body are then welded to one another with the two parts afloat. A change of level of the keel plate, in the vicinity of the joint between the two parts, allows all the welding to be carried out above water level. The tower and turbine are lifted onboard subsequently.

With the low draft of the vessel, described above, and the ability to lift it into the water in two parts, there is no need to mobilise a costly separate heavy lift vessel to transport the wind turbine vessel out of port and to the offshore site.

The present invention is capable of supporting an upwind turbine, i.e. a turbine with its turbine blades located between the source of the wind and the wind turbine mount, or a downwind turbine, i.e. a turbine with the turbine mount located between the source of the wind and the wind turbine blades. If a downwind wind turbine is used, then the centre of overall windage will be further away horizontally from the centre of the mooring attachment which is advantageous because the increased lever arm will cause the floating structure to weathervane even more freely.

The present invention is suitable for mooring to a geostationary mooring. The geostationary mooring may be of any suitable type, for example an internal or external turret mooring or a disconnectable turret mooring. In all of the appropriate systems there is a geostationary part, to which the mooring lines and subsea electrical cable or cables are attached. The floating structure freely rotates about the geostationary part. There may be any number of mooring lines or chains, e.g. three, six or nine.

In the case of a turret mooring, the turret has to be designed so as to ensure that, as the floating vessel rotates about the geostationary part of the turret mooring, the mooring chains or wires do not make contact with any part of the centre hull. In order to achieve this, the chain table to which the mooring chains or wires are secured, could be mounted beneath a cantilever extending forwards from the centre hull, but, because the floating vessel of the present invention has a large draft, the cantilever would need to be long and therefore costly. Consequently, for the present invention a preferred arrangement for the turret is to locate the chain table close to keel level, connected to a vertical shaft or column located outboard of the bow of the centre hull, or else within its bow. This vertical shaft is restrained relative to the hull, above the chain table, by means of a bearing that only resists horizontal forces. The vertical shaft is also restrained higher up, for example at the top deck of the forecastle, by a further bearing that carries both horizontal and vertical forces. This arrangement is known as a column turret.

Any turret arrangement used in the present invention allows electrical swivels to be mounted above the axis of the turret, preferably above water. The electrical swivels are preferably located within an enclosure to protect them from the weather and from possible green water in rough weather. Forced ventilation may be provided to this enclosure. The electrical swivels allow the electrical current, generated by the wind turbine, to pass away from the floating vessel via an export cable, whilst the floating vessel rotates about the geostationary part of the turret. The electrical swivels may also pass electrical signals and possibly imported electrical current.

Preferably, the turbine tower support structure comprises a turbine tower pedestal to which is connected a tower transition piece and a tower attachment flange.

The provision of a turbine tower support structure and a bracing arrangement of the type described in this specification is advantageous because it facilitates the integration of a wind turbine manufacturer's standard wind turbine tower with a bespoke floating structure, such as a trimaran. The structural elements of the floating structure are fixed to the central buoyant body and to the wind turbine tower support structure of the vessel and not to the wind turbine tower itself and this avoids introducing complexity into the integration process. If a floating structure's structural elements, such as braces have to be attached directly to the manufacturer's wind turbine tower then that might not be acceptable to the wind turbine manufacturer, such that the manufacturer may refuse to supply the wind turbine tower, or it may require a new certification to be carried out for the wind turbine tower or for the entire assembly of the tower and the turbine, since these two interact with each other, particularly with regards to dynamic responses in winds. The present invention allows a manufacturer's standard wind turbine tower to be bolted or welded to the wind turbine mount, without there being any need for adaptations to the tower.

Preferably, the wind turbine tower support structure comprises a turbine tower pedestal attached to the deck of the central buoyant body, a tower transition piece attached to the turbine tower pedestal and a tower attachment flange attached to the tower transition piece.

Preferably, at least one brace is attached between the turbine tower support structure and at least one of the central buoyant body, the first buoyant body or the second buoyant body.

Preferably, at least one brace is attached between the turbine tower support structure and the first buoyant body and at least one brace is attached between the turbine tower support structure and the second buoyant body.

Preferably, the turbine tower support structure comprises a brace connection flange and wherein a fore tubular brace and an aft tubular brace are attached between the brace connection flange and the first buoyant body and a fore tubular brace and an aft tubular brace are attached between the brace connection flange and the second buoyant body, wherein when the floating structure is moored for the purposes of facilitating operation of the wind turbine, the fore tubular braces and the aft tubular braces are located above the waterline.

Preferably, the bracing arrangement comprises at least one cross brace that is attached between the first buoyant body and the central buoyant body and at least one cross brace that is attached between the second buoyant body and the central buoyant body, wherein when the floating structure is moored for the purposes of facilitating operation of the wind turbine, the cross braces are located below the waterline. The cross braces have a relatively small cross-section and consequently any obstruction to water flowing between the central, first and second buoyant bodies is minimised.

Preferably, the central buoyant body has a keel plate, the first buoyant body has a keel plate and the second buoyant body has a keel plate, and wherein the deck of the forecastle (46), the deck of the first buoyant body and the deck of the second buoyant body are all level with each other. This is advantageous because the decks are provided at the same height above the waterline, for example, when the floating structure is semi-submerged.

Preferably, the central buoyant body has a stern region, a transitional region, a midships region and a bow region, wherein the beam of the stern region is greater than the beam of the midships region. Minimising the beam of a buoyant body increases its transparency to incident waves. This is beneficial because it reduces heave and pitch, which is important for a vessel supporting a wind turbine, and it also minimises mooring line loads thus reducing costs. Consequently, it is advantageous to reduce the beam of a buoyant body where possible, for example, in regions where the required buoyancy is lower.

Preferably, the central buoyant body has a fore part and an aft part connected to each other at a junction and wherein a fabrication arch is provided at the junction between the fore part and the aft part. In providing the central buoyant body in two parts, fabrication and assembly of the floating structure is simplified. The fabrication arch facilitates joining of the fore and aft parts, because the welding can be conducted above the waterline, once the two parts of the central buoyant body have been floated.

Preferably, the first buoyant body has an upper part and a lower part and the second buoyant body has an upper part and a lower part. Fabrication of the first and second buoyant bodies in two parts facilitates fabrication and final assembly, because the floating structure can be made in sub-assemblies that can be lowered into the water separately and joined together once they have been floated.

Preferably, at least the central buoyant body, or at least the first buoyant body and the second buoyant body, are ship-shaped and have a tapering bow. This is advantageous because drag is reduced and loads in the mooring system are reduced during the passage of waves.

Preferably, the central buoyant body, the first buoyant body and the second buoyant body have a generally rectangular transverse cross-sectional profile, with flat keel plates, flat decks, flat sides, flat internal web and bulkheads, and are fabricated from flat plate.

Preferably, the forecastle is located at the bow of the central buoyant body and the mooring attachment is attached to the fore part of the forecastle in front of the bow. Alternatively, the mooring attachment is located within the forecastle. The mooring attachment is for attachment of the floating structure to the mooring. The mooring attachment can be incorporated into the floating structure in various ways, some of those ways are described above.

Preferably, the mooring attachment is a turret mooring having an upper cantilever attached to the forecastle and having an upper journal bearing, a lower cantilever attached to the bow of the central buoyant body and having a lower journal bearing, a substantially vertical turret shaft running between the upper journal bearing and the lower journal bearing and a chain table attached to the lower end of the turret shaft below the lower journal bearing. Alternatively, the upper journal bearing and the lower journal bearing can be located within the forecastle.

Preferably, the bow of the central buoyant body is provided with a chain table clearance surface adjacent to the chain table.

Preferably, the floating structure further comprises an entrapment plate attached to at least the central buoyant body, or at least the first buoyant body and the second buoyant body. The provision of an entrapment plate is advantageous because it will inhibit the vertical motions of the floating structure. The entrapment plate forces the water above itself to move up, and the water below itself to move down, when wave and wind forces, acting on the floating structure, make the plate move.

Preferably, the central buoyant body has a deck, the first buoyant body has a deck, the second buoyant body has a deck and the forecastle has a deck and each of the four decks is arranged such that, when the floating structure is moored for the purposes of facilitating operation of the wind turbine, the floating structure can be ballasted so that the upper deck of the central buoyant body is located below the waterline and the other upper decks are located above the waterline.

Preferably, the central buoyant body is at least twice as long as the first buoyant body and the second buoyant body. It is advantageous for the central buoyant body to be relatively long to maintain pitch and pitch accelerations of the floating structure within limits that are acceptable to the wind turbine and blades. The actual dimension depends mainly on the height of the tower and how extreme the sea states are that could be encountered at the location.

Preferably, the first buoyant body and the second buoyant body are the same length as each other and have their sterns aligned with the stern of the central buoyant body.

Preferably, the turbine tower support structure is located in the aft third of the central buoyant body. The wind exerts a thrust on the turbine blades and also on the nacelle, tower and bracings, all of which have windage. This thrust rotates the floating structure so that it heads into the wind. The moment that causes the rotation is the product of the total thrust and the lever arm, this being the horizontal distance between the centre of the overall thrust and the centre of the mooring system. It is advantageous for the floating structure to rotate into the wind so as to reduce roll motions of the structure and also to reduce mooring line loads because in general the seas are aligned with the wind and these seas exert less force on the vessel if it heads into the seas. It follows that it is advantageous for the wind turbine tower support structure to be located in the aft third of the length of the floating structure in order to maximise the lever arm just mentioned and to thus maximise the moment that advantageously rotates the vessel to head into the wind.

Preferably, each of the central buoyant body, the first buoyant body and the second buoyant body is provided with at least one ballast chamber which, in use, can be flooded with water, or partially emptied, or totally emptied. This facilitates raising or lowering of the floating structure.

Preferably, the floating structure further comprises a lower aft sub-assembly attached to an upper aft sub-assembly, which is in turn attached to a fore sub-assembly, wherein the lower aft sub-assembly comprises an aft part of the central buoyant body, the lower part of the first buoyant body and the lower part of the second buoyant body, wherein the upper aft sub-assembly comprises the upper part of the first buoyant body and the upper part of the second buoyant body, and at least part of the turbine tower support structure, and the fore sub-assembly comprises a fore part of the central buoyant body, the forecastle and the mooring attachment.

Preferably, the forecastle is a buoyant body. This is advantageous because the forecastle can provide buoyancy near to the mooring attachment. The forecastle can be provided with at least one ballast chamber which, in use, can be flooded with water, or partially emptied, or totally emptied. This facilitates raising or lowering of the floating structure.

The present invention provides in a second aspect a horizontal axis wind turbine supported on a wind turbine tower that is attached to the turbine tower support structure.

Wind turbines are often equipped with a yaw bearing and controls, by means of which the turbine can rotate on top of a tower about a vertical yaw axis and thus maximise power production in changing wind conditions and the designs of the wind turbines typically carry certification to function in this manner. Therefore, the turbine column and the support members are arranged so that when a wind turbine is mounted on the wind turbine mount, the wind turbine can rotate about a vertical yaw axis and the blades of the wind turbine can rotate about their horizontal axis without any interference between the blades and the support members and the floating structure can rotate about a vertical yaw axis of the mooring attachment.

Alternatively, the wind turbine mount permits mounting of a wind turbine so that the wind turbine cannot rotate about a vertical yaw axis. It may be advantageous to fix the wind turbine relative to the wind turbine support and thus relative to the buoyant bodies because this avoids the complexity of equipping the wind turbine with a yaw bearing and a drive motor and mechanism to actively rotate the wind turbine around its yaw axis.

The wind turbine mount is also beneficial in reducing the wear on the turbine blades. On any wind turbine, maximisation of clearances between the supporting structure and the tips of the turbine blades as the turbine rotates reduces fatigue on the blades and thus increases their life. When a wind turbine is supported on a conventional wind turbine column, it is necessary to provide the blades with a relatively high stiffness to ensure that adequate clearance is provided between the blade tips and the column during rotation. The benefit applies if the wind turbine cannot rotate about a vertical axis and also if the wind turbine is permitted to rotate about a yaw axis by up to 10 degrees.

In the alternative, the turbine column and the wind turbine support are arranged so that when a wind turbine is mounted on the wind turbine mount, the wind turbine cannot rotate about a vertical yaw axis and the floating structure can rotate about a vertical yaw axis of the mooring attachment.

The various aspects of the present invention will be described below, with reference to the following figures:
Figure 1 is a perspective view of a floating wind turbine vessel with a wind turbine;

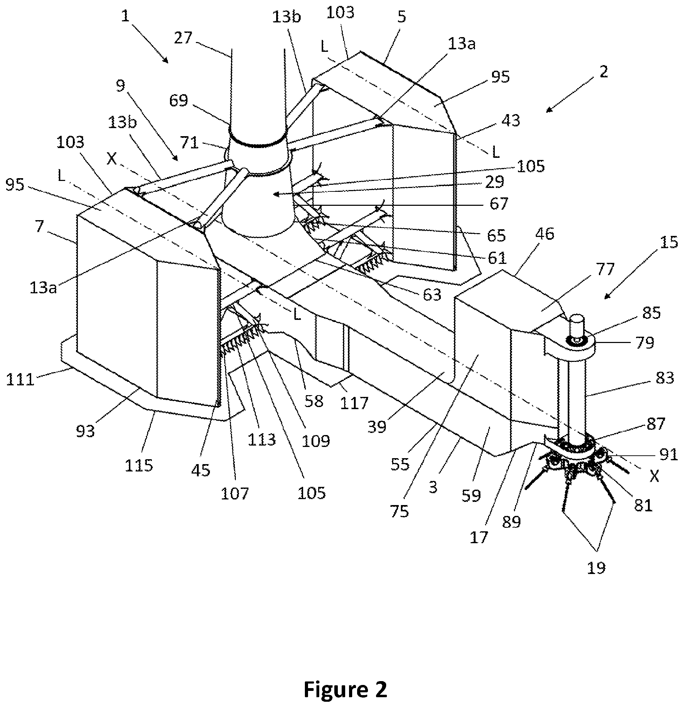

Figure 2 is a close-up perspective view of the floating wind turbine vessel of Figure 1;

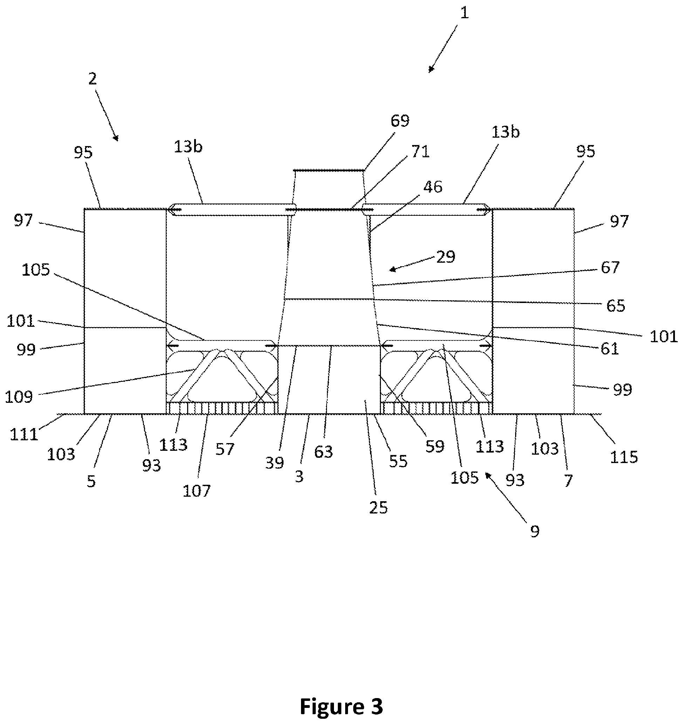

Figure 3 is a stern elevation of the floating wind turbine vessel of Figure 1;

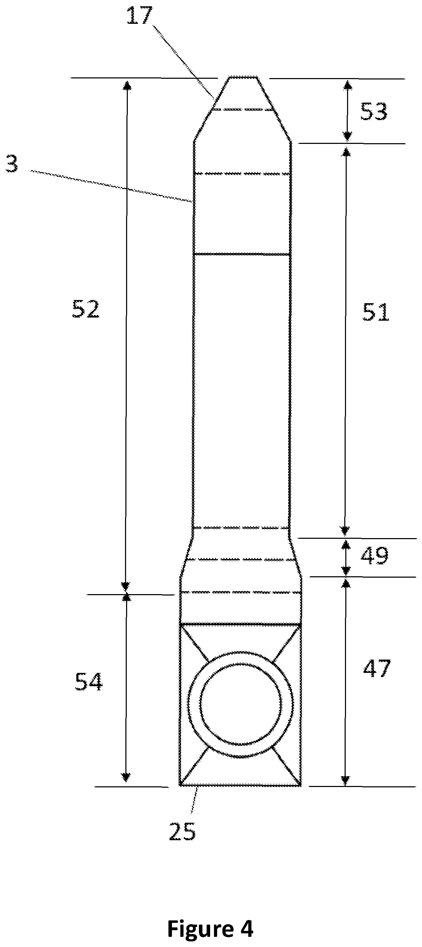

Figure 4 is a plan view of the centre barge of the floating wind turbine vessel of Figure 1;

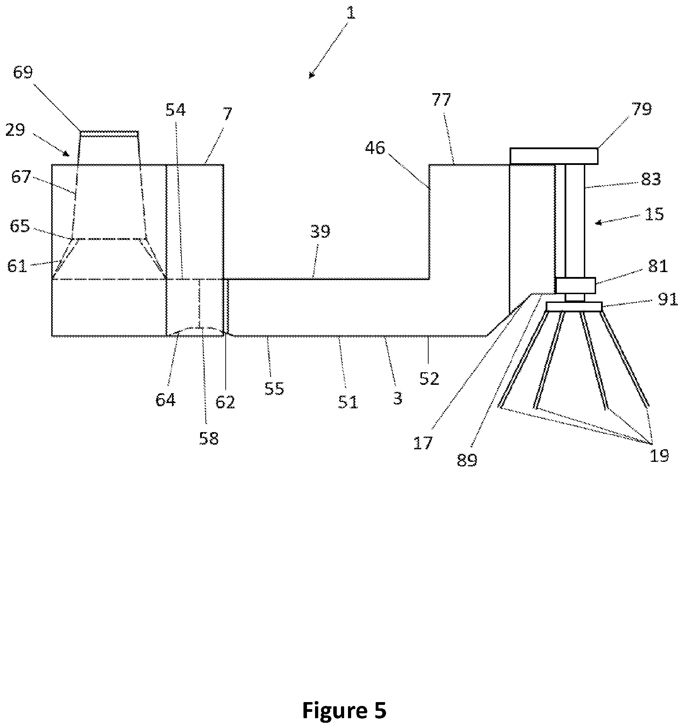

Figure 5 is a side elevation of the centre barge of the floating wind turbine vessel of Figure 1; and
Figure 6 is an exploded perspective view of the three-sub assemblies of the floating wind turbine vessel of Figure 1.

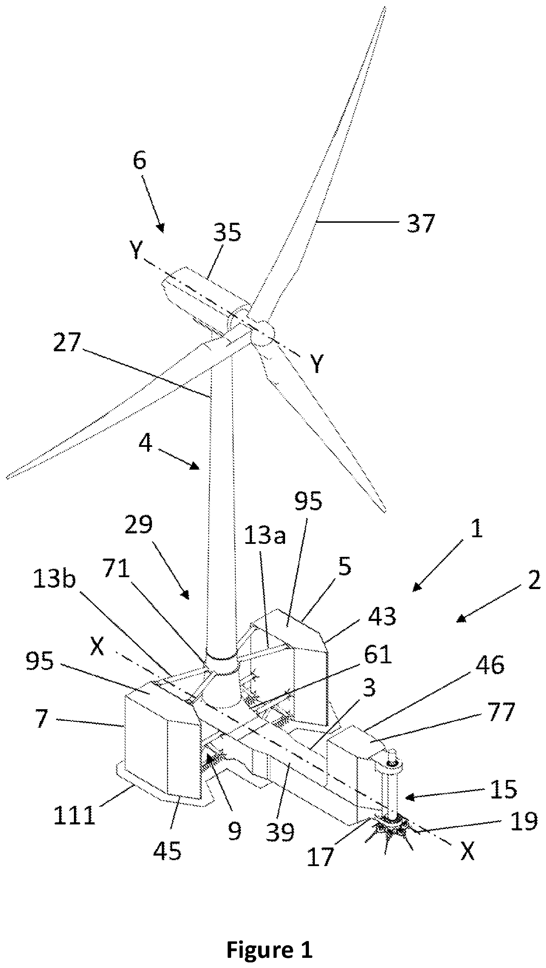

A floating wind turbine vessel 1 according to the first aspect of the present invention is illustrated in Figure 1. It comprises a trimaran hull arrangement 2 and a wind turbine support 4 to which is attached a wind turbine 6. It has hulls in the form of barges with a centre barge 3, a port outer barge 5 located on the port side of the centre barge 3 and a starboard outer barge 7 located on the starboard side of the centre barge 3. The barges 3,5,7 are buoyant. The centre barge 3 has a longitudinal axis X-X. The port and starboard outer barges 5,7 are located at the aft end of the centre barge 3, are parallel to the centre barge 3 and are spaced apart from the centre barge 3. The barges 3,5,7 are attached together and held apart from each other with a bracing arrangement 9. A turret mooring 15 is located adjacent to the bow 17 of the centre barge 3. Six mooring chains 19 attach the turret mooring 15 to anchors on the seabed (not shown). Transverse thrusters 26 are provided adjacent to the stern 25 of the centre barge 3. Each of the barges 3, 5, 7 is provided with at least one ballast compartment (not shown). The floating wind turbine vessel 1 is provided with a means of adding water to the ballast compartments, or removing water from the ballast compartments.

The wind turbine support 4 is located adjacent to the aft ends of the barges 3, 5, 7 and comprises a turbine tower 27 attached to a turbine tower support structure 29. The turbine tower 27 can be removably attached to, or attached in a permanent manner to, the turbine tower support structure 29. The turbine tower 27 is aligned with the centreline X-X of the centre barge 3. The turbine tower 27 is hollow, tapered inwardly from its base and is equipped internally with a ladder (not shown) and/or a mechanical lift to provide access to the wind turbine 6, for example for maintenance or repair work. Two fore and aft tubular braces 13a, 13b are attached to either side of the turbine tower support structure 29 and to either the port outer barge 5 or the starboard outer barge 7.

The wind turbine 6 is an upwind, horizontal axis, type with a generator (not shown) which is located within a nacelle 35 and to which are attached three wind turbine blades 37 (the wind turbine could, in the alternative, be a downwind, horizontal axis type). The turbine tower 27 and the turbine tower support structure 29 have a combined length that supports the wind turbine 6 so that the bottom of its nacelle 35 is approximately 150m above the level of the surface of the sea. The wind turbine blades 37 rotate about a horizontal axis that is parallel to the main deck 39 of the centre barge 3. The blades 37 either rotate in a plane that is upwind of the wind turbine tower as shown (or alternatively in a plane that is downwind of the wind turbine tower 27 (not shown)).The nacelle 35 can rotate, or yaw, relative to the turbine tower 27 about a vertical axis of rotation so that the nacelle 35 can be oriented such that its longitudinal axis Y-Y is aligned with the longitudinal axis X-X of the centre barge 3 and so that it points towards the bow 17, or so that its longitudinal axis Y-Y is misaligned with the longitudinal axis X-X of the centre barge 3, i.e. so that it points to the port side or to the starboard side.

A subsea electrical cable 41 is attached to the vessel 1 at the turret mooring 15 and runs down to the seabed and then to shore, or to a high voltage transformer platform at the wind turbine farm, or to another vessel, if there is an array of vessels.

The barges 3,5,7 have a rectangular cross-sectional profile. The cross-sectional profile remains the same along the length of the port outer barge 5 and the starboard outer barge 7 except for at their bows 43,45 respectively, which are pointed. The centre barge 3 is provided with a forecastle 46 adjacent to its bow 17 and is provided with a turbine tower support 29 adjacent to its stern 25. The cross-sectional profile of the centre barge 3 changes along its length, as will be explained in further detail below. The barges 3,5,7 are made from steel.

The centre barge 3 is provided with sufficient buoyancy to support the weight of the turbine 6, the turbine tower 27 and the turbine tower support structure 29 and has sufficient length, mass and inertia to limit pitch, roll and heave responses and accelerations. The centre barge 3 has a length of approximately 88m, a beam that varies from stern 25 to bow 17 and a constant depth.

The centre barge 3 comprises four regions along its length. A stern region 47, a transitional region 49, that runs between the stern region 47 and a midships region 51, and a bow region 53 at the other end of the midships region 51. The centre barge 3 also comprises a fore part 52 and an aft part 54. The fore part 52 comprises the bow region 53, the midships region 51 and part of the length of the stern region 47. The aft part 54 comprises the part of the stern region 47 that is not part of the fore part 52. The fore part 52 and the aft part 54 are joined together at a junction 56. A joining arch 58 spans the junction 56 and runs transversely to the centre barge 3 and perpendicularly to axis X-X. A fore arch part 62 is provided on the fore part 52 and an aft arch part 64 is provided on the aft part 54. The bottom edge of the aft arch part 64 is located vertically below the fore edge of the base of the turbine tower pedestal 61. The top of the joining arch 58 has a vertical height of 2m above the keel plate 55.

The beam of the centre barge 3 narrows in steps along its length from the stern 25, where the beam is greatest, to the bow 17, where the beam narrows towards the front of the bow 17. The cross-sectional profile of the centre barge 3 is rectangular. The main deck 39 is horizontal and is parallel to the keel plate 55 of the centre barge 3, which is also horizontal. The port side 57 and the starboard side 59 of the centre barge 3 are vertical and run perpendicularly between the main deck 39 and the keel plate 55. The centre barge 3 is symmetrical about its longitudinal axis X-X in a transverse direction. The keel plate 55 is generally flat except where the joining arch 58 is provided.

The stern region 47 has a constant beam of 15m, a depth of 10m and a length of 24m. The midships region 51 has a constant beam of 12m, a depth of 10m and a length of 50m. The transitional region 49 has a beam that reduces at a constant rate from 10m at its interface with the stern region 47 to 12m at its interface with the bow region 53 and it has a length of 6m. The bow region 53 has a beam that reduces at a constant rate from 12m at its interface with the midships region 51 to a point at the bow 17 and it has a length of 8m.

The turbine tower support structure 29 extends upwardly from the main deck 39 of the stern region 47 of the centre barge 3. The turbine tower support structure 29 comprises a turbine tower pedestal 61 which transitions in a vertical direction from a rectangular cross-sectional profile base 63 at its lower end to a circular cross-sectional profile connector 65 at its upper end. The base 63 extends transversely across the centre barge 3 from its port side 57 to its starboard side 59 and extends longitudinally forwards from the stern 25 by a distance of 20m. The centre-point of the connector 65 is aligned with the longitudinal axis X-X and is halfway along the length of the rectangular cross-sectional profile base 63, i.e. 10m forwards from the stern 25.

A conical tower transition piece 67, of circular cross-sectional profile, extends upwardly from the connector 65 to a tower attachment flange 69. The diameter of the conical tower transition piece 67 reduces at a constant rate as it extends away from the connector 65 until its diameter, and thus the diameter of the tower attachment flange 69, are complementary to the diameter of the base of the turbine tower 27. This facilitates attachment of the turbine tower 27 to the turbine tower support structure 29.

A brace connection flange 71 is provided on the external surface of the conical tower transition piece 67. The inboard ends of the fore and aft tubular braces 13a,13b are connected to the brace connection flange 71. The outboard ends of the fore and aft tubular braces 13a, 13b are connected to either the port outer barge 5 or the starboard outer barge 7. The brace connection flange 71 is located at a height above the main deck 39 of the centre barge 3 such that the fore and aft tubular braces 13a, 13b are orientated horizontally.

The forecastle 46 extends upwardly from the main deck 39 of the centre barge 3 by a distance of 20m and extends, in an aft direction, from the bow 17 to a point part way along the midships region 51. The length of the forecastle 46 along the axis X-X is 22m. The forecastle 46 has a beam of 12m and a port side 73 and a starboard side 75 that run vertically upwardly from the main deck 39 to a horizontal forecastle deck 77, that is provided at the top of the forecastle 46. In plan view, the profile of the forecastle 46 matches that of the bow region 53 and the fore part of the midships region 51. The forecastle 46 is a buoyant body that provides buoyancy to the floating wind turbine vessel 1. The forecastle 46 has one or more ballast compartments (not shown) to which water can be added, or removed, during use. The forecastle 46 has a similar construction to the barges 3,5,7, i.e. it is manufactured from flat steel plates in a form that produces a buoyant body.

In plan view, the bow region 51 has a generally triangular shape and it narrows from a base, which extends across the 12m beam at the interface of the bow region 51 and the midships region 51, towards the bow 17. In elevation, the bow region 51 has a horizontal upper surface, a vertical front surface, running downwardly from the front of the upper surface, and a kinked lower surface. The lower surface runs horizontally and in an aft direction from the bottom of the vertical surface, for just over the half the length of the bow region 53, before inclining downwardly until it meets the midships region 51. The inclined part of the lower surface joins with an inclined surface of the midships region 51 which runs downwardly until it meets the keel plate 55. The horizontal section of the lower surface of the bow region 51 forms a chain table clearance surface 89.

The turret mooring 15 is attached to the fore part of the forecastle 46 and the bow region 53. The turret mooring 15 comprises a horizontally orientated upper cantilever 79 and a horizontally orientated lower cantilever 81. The upper and lower cantilevers 79,81 extend outwardly from the bow section 53 in a direction parallel to longitudinal axis X-X. The top surface of the upper cantilever 79 is level with the forecastle deck 77. The bottom surface of the lower cantilever 81 is level with the chain table clearance surface 89. The upper cantilever 79 is provided with either a roller bearing or journal bearings xx that carry vertical and horizontal loads . The lower cantilever 81 is provided with a journal bearing 87 that carries horizontal loads. A vertically orientated turret shaft 83 is located within the journal bearings 85,87 and extends below the bottom of the lower cantilever 81. A chain table 93 is attached to the bottom of the turret shaft 83. With this arrangement the floating vessel can rotate freely about the turret shaft 83 and the chain table 93, as if does so there is a clearance between the chain table 93 and the hull, due to the kinked lower surface of the bow section 53.

The port outer barge 5 and the starboard outer barge 7 have the same cross-sectional profile. In plan view, the profile is made up of a rectangle with a triangle attached to the forward facing short side. The apex of the triangle is located on the longitudinal axis L-L and thus the port and starboard outer barges 5,7 are symmetrical about axis L-L. The port and starboard outer barges 5,7 have a constant cross-sectional profile throughout their depth, their beam is 12m and their depth is 30m. The port and starboard outer barges 5,7 each have a keel plate 93 and an outer barge upper deck 95 that are parallel to each other and located horizontally. The keel plates 93 are horizontally aligned with the keel plate 55 of the centre barge 3. Consequently, the port and starboard outer barges 5,7 extend vertically above the main deck 39 of the centre barge 3 and the outer barge upper decks 95 are at the same height as the forecastle deck 77.

The port and starboard outer barges 5,7 each have an upper part 97 and a lower part 99 which are joined together at a junction 101. The lower parts have a height of 12.7m.

The stern 103 of each of the port and starboard outer barges 5,7 is aligned with the stern 25 of the centre barge 3. The longitudinal axis L-L of each of the port and starboard outer barges 5,7 is aligned with the longitudinal axis X-X of the centre barge 3 so that all three barges 3, 5, 7 are parallel to each other. The three barges 3, 5, 7 are spaced apart from each other by the bracing arrangement 9 such that a flow passageway with a width of 16.5m is created between the port outer barge 5 and the centre barge 3 and between the starboard outer barge 7 and the centre barge 3. The total beam of the vessel 1 is 72m.

The bracing arrangement 9 comprises four horizontal upper cross braces 105, four horizontal lower cross braces 107, and diagonal struts 109 attached between the upper and lower cross braces 105,107.

A first upper cross brace 105 is connected to the side of the port outer barge 5 adjacent to its stern 103 and extends perpendicularly and horizontally to the port side of the stern region 47 of the centre barge 3. A second upper cross brace 105 is connected to the side of the port outer barge 5, forwards of the first upper cross brace 105, and extends perpendicularly and horizontally to the port side of the stern region 47 of the centre barge 3. A third upper cross brace 105 is connected to the side of the starboard outer barge 7 adjacent to its stern 103 and extends perpendicularly and horizontally to the starboard side of the stern region 47 of the centre barge 3. A fourth upper cross brace 105 is connected to the side of the starboard outer barge 7, forwards of the third upper cross brace 105, and extends perpendicularly and horizontally to the starboard side of the stern region 47 of the centre barge 3. The upper cross braces 105 are connected to the centre barge 3 at the upper ends of its port and starboard sides 57, 59, i.e. adjacent to the main deck 39.

A first, second, third and fourth lower cross brace 107 are located directly below the first, second, third and fourth upper cross braces 105 and two diagonal struts 109 are placed between each pair of upper and lower cross braces 105, 107. The lower cross braces 107 are connected to the centre barge 3 towards the lower ends of its port and starboard sides 57, 59, i.e. adjacent to the keel plate 55.

As mentioned above, the other bracing that is attached to the port and starboard outer barges 5,7 is the bracing from fore and aft tubular braces 13a, 13b.

There are two horizontally orientated fore tubular braces 13a, one either side of the turbine tower support structure 29. A first fore tubular brace 13a is attached at its outboard end to the port outer barge 5 at a point adjacent to the forward end of its side wall and its upper deck 95. A second fore tubular brace 13a is attached at its outboard end to the starboard outer barge 7 at a point adjacent to the forward end of its side wall and its upper deck 95. The inner ends of the first and second fore tubular braces 13a are connected to the brace connection flange 71 that is provided on the conical tower transition piece 67 of the turbine tower support structure 29. Consequently, the first and second fore tubular braces 13a extend in an aft direction from their outer ends to their inner ends.

There are two horizontally orientated aft tubular braces 13b, one either side of the turbine tower support structure 29. A first aft tubular brace 13b is attached at its outboard end to the port outer barge 5 at a point adjacent to its stern 103 and its upper deck 95. A second aft tubular brace 13b is attached at its outboard end to the starboard outer barge 7 at a point adjacent to its stern 103 and its upper deck 95. The inner ends of the first and second aft tubular braces 13b are connected to the brace connection flange 71 that is provided on the conical tower transition piece 67 of the turbine tower support structure 29. Consequently, the first and second aft tubular braces 13b extend in a forwards direction from their outer ends to their inner ends.

The floating wind turbine vessel 1 also comprises an entrapment plate 111 which extends around the perimeters of the port and starboard outer barges 5,7 and across part of the stern region 47 of the centre barge 3. The entrapment plate 111 is attached to the keel plates 93 of the port and starboard outer barges 5,7 and the keel plate 55 of the centre barge 3. Support struts 113 suspend the entrapment plate 111 from the lower cross braces 107 and are spaced from each other, so as to present the smallest surface area to water flowing through the passageways between the port and starboard outer barges 5,7 and the centre barge 3. The entrapment plate 111 has an aft part 115, which is attached to the aft part 54 of the centre barge 3 and to the port and starboard outer barges 5,7, and a fore part 117, which is attached to the fore part 52 of the centre barge 3.

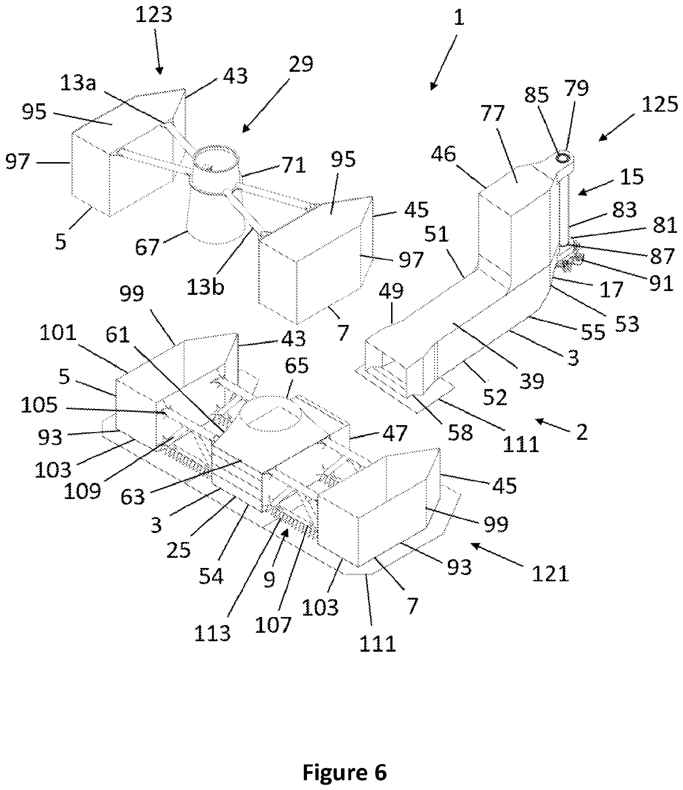

Figure 6 shows how the floating wind turbine vessel 1 is fabricated as three sub-assemblies which are subsequently joined together to form the final assembly. There is a lower aft sub-assembly 121, an upper aft sub-assembly 123 and a fore sub-assembly 125.

The lower aft sub-assembly 121 comprises the lower part 99 of the port outer barge 5, the lower part 99 of the starboard outer barge 7, the aft part 54 of the centre barge 3, to which is attached the turbine tower pedestal 61, and the aft part 115 of the entrapment plate 111. The lower parts 99 of the port and starboard outer barges 5,7 are connected to the aft part 54 of the centre barge 3 by the bracing arrangement 9 and the entrapment plate 111 is attached to the bracing arrangement 9 by the support vanes 113.

The upper aft sub-assembly 123 comprises the upper part 97 of the port outer barge 5, the upper part 97 of the starboard outer barge 7 and the conical tower transition piece 67, to which the tower attachment flange 69 and the brace connection flange 71 are attached. The two fore tubular braces 13a and the two aft tubular braces 13b are attached between the brace connection flange at the upper parts 97 of the port and starboard outer barges 5,7.

The fore sub-assembly 125 comprises the fore part 52 of the centre barge 3, to which the forecastle 46, the turret mooring 15 and the fore part 117 of the entrapment plate 111 are attached.

To assemble the floating wind turbine vessel 1, the lower aft sub-assembly 121 and the fore sub-assembly 125 are lowered into the water and are either not ballasted, or only a small weight of ballast is added, so that the top of the fore arch part 62 and the top of the aft arch part 64 of the fabrication arch 58 are located above the waterline. The fore and aft arch parts 62,64 are then welded together, joining the lower aft sub-assembly 121 and the fore sub-assembly 125 together. The upper aft sub-assembly 123 is then lowered onto the lower aft sub-assembly 121 and the upper parts 97 of the port and starboard outer barges 5,7 are welded to the lower parts 99 of the port and starboard outer barges 5,7. The conical tower transition piece 67 is welded to the turbine tower pedestal 61 at the connector 65.

A wind turbine tower 27 supporting a wind turbine 6 can then be fitted to the floating wind turbine vessel 1 by attaching a flange on the wind turbine tower 27 to the tower attachment flange 27 of the floating wind turbine vessel 1.

Once the floating wind turbine vessel 1 has been assembled some ballast may be added so so as to have adequate stability for the wind turbine tower 27 and the wind turbine 6 to be lifted and attached to it. The draft of the floating wind turbine vessel 1, after adding the ballast, the wind turbine tower 27 and the wind turbine 6 is approximately 6m. The entire integrated vessel and turbine is then commissioned and checked prior to commencement of towing out to the offshore installation site.

Before the floating wind turbine vessel 1 is towed to its offshore installation site, the mooring system is pre-laid by installing the seabed anchors or piles and laying the mooring chains or wires 19.

For commencement of the tow from the assembly site to the installation site the draft may remain at approximately 6m or it may be in increased to about 8m so as to give increased stability, depending on the available water depth in the channel from the assembly site to open water. The tow speed will be highest, and hence the risks during tow decreased, if the draft is maintained at these values throughout the tow.

The floating wind turbine vessel 1 is then towed to its offshore location and connected to all the mooring chains 19 via the mooring turret 15 by connecting all of the mooring chains 19 to the chain table 91, either with the assistance of a winch on an attending vessel or using a winch (not shown) mounted on the centre barge 3. The subsea electrical cable 41 is then installed within the geostationary cylinder (not shown) of the turret mooring 15 and connected to the electrical swivel.

The floating wind turbine vessel 1 is ballasted to the correct level by admitting water into the ballast compartments provided in each of the three barges 3, 5, 7. Ballast is added until the upper deck 77 of the forecastle 46 is located at a height of 10m above the waterline. The draft of the floating wind turbine vessel 1 is then 20m. If unfavourable weather is encountered during the tow, this ballasting operation may take place, or partially take place, before the floating wind turbine vessel 1 is connected to the mooring system, so to increase the stability of the the floating wind turbine vessel 1.

The centre barge 3 is designed with a hull that is in operation submerged over much of its length in order to reduce pitch and roll of the floating wind turbine vessel 1 and also to minimise the trim that occurs when wind applies thrust to the wind turbine 6. The port and starboard outer barges 5,7 provide transverse stability and additional buoyancy.

The wind turbine 6 is connected to an onboard transformer (not shown). An onboard electrical cable (not shown) connects the transformer to the subsea electrical cable 41 via an electrical swivel (not shown) located on the axis of the turret mooring 15 within a protective housing. The electrical swivel allows electrical current to flow during relative rotational movement between the onboard electrical cable and the subsea electrical cable 41. Alternatively, the generated electricity and sea water may be used to prepare a substance such as hydrogen, which can be exported from the vessel in a flexible pipe.

When the floating wind turbine vessel 1 is moored the turret mooring 15 will enable it to take up the correct heading, i.e. facing directly into the wind. The wind turbine 6, including the wind turbine blades 37 have a large area of windage which is located at a significant distance from the centre of the turret mooring 15, and this assists with turning the vessel 1 into the wind. In addition, it is usual for seas generated by the wind to be coincident with the wind direction and this helps to achieve the correct heading. The transverse thrusters 26 can be used to turn the vessel 1 to the correct heading if this not achieved by use of the windage alone, for example if there are tidal currents or cross swells that are not aligned with the wind direction. The transverse thrusters 26 will be instructed by a control system (not shown) that has sensors (not shown), for example an anemometer, that provide information relating to wind speed and direction, relative to the heading of the floating wind turbine vessel 1 at any one time.

The port outer barge 5 and the starboard outer barge 7 are spaced apart from the centre barge 3 and the spaces between the barges 3, 5, 7 permits water and waves to flow freely between the barges 3, 5, 7, as well as around the outside of them.

Internal and external turret mooring systems of a similar type are commonly used within the oil and gas industry. Other types of turret mooring system, for example disconnectable turret mooring systems, are also suitable for use with the present invention.

## Claims

1. A floating structure (1) for supporting a horizontal axis wind turbine (6) supported on a wind turbine tower (27), the floating structure (1) comprising, a central buoyant body (3), a first buoyant body (5) located on one side of the central buoyant body (3) and a second buoyant body (7) located on the other side of the central buoyant body (3), wherein at least a part of the central buoyant body (3) is interposed between the first buoyant body (5) and the second buoyant body (7), a bracing arrangement (9) that connects the first buoyant body (5) to the central buoyant body (3) and that connects the second buoyant body (7) to the central buoyant body (3), wherein the bracing arrangement (9) acts to hold the first buoyant body (5) and the second buoyant body (7) away from the central buoyant body (3) in order to create a flow passageway between each of the first buoyant body (5) and the second buoyant body (7) and the central buoyant body (3), a turbine tower support structure (29) that is located within the aft half of the length of the floating structure (1), and a forecastle (46) located at the fore end of the central buoyant body (3), wherein at least a part of each of the first buoyant body (5), the second buoyant body (7) and the forecastle (46) extend above the central buoyant body (3), the central buoyant body (3) further comprising a mooring attachment (15) that is located within the fore half of the length of the floating structure (1) and that is suitable for attachment to a geostationary mooring, wherein, in use, the central buoyant body (3), the first buoyant body (5), the second buoyant body (7) and the forecastle (46) can be lowered or raised relative to the waterline and wherein when the floating structure (1) is moored for the purposes of facilitating operation of the wind turbine (6), the central buoyant body (3) is located below the waterline and the tower support structure (29) and at least a part of each of the forecastle (46), the first buoyant body (5) and the second buoyant body (7) are located above the waterline.

2. A floating structure (1) as claimed in claim 1, wherein the turbine tower support structure (29) comprises a turbine tower pedestal (61) to which is connected a tower transition piece (67) and a tower attachment flange (69).

3. A floating structure (1) as claimed in claim 1 or claim 2, wherein the wind turbine tower support structure (29) comprises a turbine tower pedestal (61) attached to the deck (39) of the central buoyant body (3), a tower transition piece (67) attached to the turbine tower pedestal (61) and a tower attachment flange (69) attached to the tower transition piece (67).

4. A floating structure (1) as claimed in any one of claims 1, 2 or 3, wherein at least one brace (13a, 13b) is attached between the turbine tower support structure (29) and at least one of the central buoyant body (3), the first buoyant body (5) or the second buoyant body (7).

5. A floating structure (1) as claimed in any preceding claim, wherein the turbine tower support structure (29) comprises a brace connection flange (71) and wherein a fore tubular brace (13a) and an aft tubular brace (13b) are attached between the brace connection flange (71) and the first buoyant body (5) and a fore tubular brace (13a) and an aft tubular brace (13b) are attached between the brace connection flange (71) and the second buoyant body (7), wherein when the floating structure (1) is moored for the purposes of facilitating operation of the wind turbine (6), the fore tubular braces (13a) and the aft tubular braces (13b) are located above the waterline.

6. A floating structure (1) as claimed in any preceding claim, wherein the bracing arrangement (9) comprises at least one cross brace (105, 107) that is attached between the first buoyant body (5) and the central buoyant body (3) and at least one cross brace (105, 107) that is attached between the second buoyant body (5) and the central buoyant body (3), wherein when the floating structure (1) is moored for the purposes of facilitating operation of the wind turbine (6), the cross braces (105, 107) are located below the waterline.

7. A floating structure (1) as claimed in any preceding claim, wherein the central buoyant body (3) has a keel plate (55), the first buoyant body (5) has a keel plate (93) and the second buoyant body (7) has a keel plate (93), and wherein the deck (77) of the forecastle (46), the deck (95) of the first buoyant body (5) and the deck (95) of the second buoyant body (7) are all level with each other.

8. A floating structure (1) as claimed in any preceding claim, wherein the central buoyant body (3) has a fore part (52) and an aft part (54) connected to each other at a junction (56) and wherein a fabrication arch is provided at the junction (56) between the fore part (52) and the aft part (54).

9. A floating structure (1) as claimed in any preceding claim, wherein the forecastle (46) is located at the bow (17) of the central buoyant body (3) and the mooring attachment (15) is attached to the fore part of the forecastle (46) in front of the bow (17).

10. A floating structure (1) as claimed in any preceding claim, wherein the mooring attachment (15) is a turret mooring (15) having an upper cantilever (79) attached to the forecastle (46) and having an upper journal bearing (85), a lower cantilever (81) attached to the bow (17) of the central buoyant body (3) and having a lower journal bearing (87), a substantially vertical turret shaft (83) running between the upper journal bearing (85) and the lower journal bearing (87) and a chain table (91) attached to the lower end of the turret shaft (83) below the lower journal bearing (87).

11. A floating structure (1) as claimed in any preceding claim, wherein the central buoyant body (3) has a deck (39), the first buoyant body (5) has a deck (95), the second buoyant body has a deck (95) and the forecastle (46) has a deck (77) and each of the four decks (39, 95, 77) is arranged such that, when the floating structure (1) is moored for the purposes of facilitating operation of the wind turbine (6), the floating structure (1) can be ballasted so that the upper deck (39) of the central buoyant body is located below the waterline and the other upper decks (39, 95, 77) are located above the waterline.

12. A floating structure (1) as claimed in any of the preceding claims, wherein the turbine tower support structure (29) is located in the aft third of the central buoyant body (3).

13. A floating structure (1) as claimed in any of the preceding claims, comprising a lower aft sub-assembly (121) attached to an upper aft sub-assembly (123), which is in turn attached to a fore sub-assembly (125), wherein the lower aft sub-assembly (121) comprises an aft part (54) of the central buoyant body, the lower part (99) of the first buoyant body (5) and the lower part (99) of the second buoyant body (7), wherein the upper aft sub-assembly (123) comprises the upper part (97) of the first buoyant body (5) and the upper part (97) of the second buoyant body (7), and at least part of the turbine tower support structure (29), and the fore sub-assembly (125) comprises a fore part (52) of the central buoyant body (3), the forecastle (46) and the mooring attachment (15).

14. A floating structure (1) as claimed in any of the preceding claims, wherein the forecastle (46) is a buoyant body.

15. A floating structure (1) as claimed in any of the preceding claims further comprising a horizontal axis wind turbine (6) supported on a wind turbine tower (27) that is attached to the turbine tower support structure (29).

## Patentansprüche

1. Schwimmende Struktur (1) zum Tragen einer Windturbine (6) mit horizontaler Achse, die von einem Windturbinenturm (27) getragen wird, wobei die schwimmende Struktur (1) einen zentralen Auftriebskörper (3), einen ersten Auftriebskörper (5), der auf einer Seite des zentralen Auftriebskörpers (3) angeordnet ist, und einen zweiten Auftriebskörper (7), der auf der anderen Seite des zentralen Auftriebskörpers (3) angeordnet ist, umfasst, wobei mindestens ein Teil des zentralen Auftriebskörpers (3) zwischen dem ersten Auftriebskörper (5) und dem zweiten Auftriebskörper (7) angeordnet ist, eine Verstrebungsanordnung (9), die den ersten Auftriebskörper (5) mit dem zentralen Auftriebskörper (3) verbindet und die den zweiten Auftriebskörper (7) mit dem zentralen Auftriebskörper (3) verbindet, wobei die Verstrebungsanordnung (9) so wirkt, dass sie den ersten Auftriebskörper (5) und den zweiten Auftriebskörper (7) von dem zentralen Auftriebskörper (3) fernhält, um einen Strömungsdurchgang zwischen dem ersten Auftriebskörper (5) und dem zweiten Auftriebskörper (7) und dem zentralen Auftriebskörper (3) zu schaffen, eine Turbinenturmträgerstruktur (29), die in der hinteren Hälfte der Länge der schwimmenden Struktur (1) angeordnet ist, und ein Vorschiff (46), das am vorderen Ende des zentralen Schwimmkörpers (3) angeordnet ist, wobei sich mindestens ein Teil des ersten Auftriebskörpers (5), des zweiten Auftriebskörpers (7) und des Vorschiffs (46) oberhalb des zentralen Auftriebskörpers (3) erstreckt, wobei der zentrale Auftriebskörper (3) ferner eine Verankerungsbefestigung (15) umfasst, die sich in der vorderen Hälfte der Länge der schwimmenden Struktur (1) befindet und die zur Befestigung an einer geostationären Verankerung geeignet ist, wobei im Gebrauch der zentrale Auftriebskörper (3), der erste Auftriebskörper (5), der zweite Auftriebskörper (7) und das Vorschiff (46) relativ zur Wasserlinie abgesenkt oder angehoben werden können und wobei, wenn die schwimmende Struktur (1) zum Zweck der Erleichterung des Betriebs der Windturbine (6) verankert ist, der zentrale Auftriebskörper (3) unterhalb der Wasserlinie angeordnet ist und die Turmstützstruktur (29) und mindestens ein Teil des Vorschiffs (46), des ersten Auftriebskörpers (5) und des zweiten Auftriebskörpers (7) jeweils oberhalb der Wasserlinie angeordnet sind.

2. Schwimmende Struktur (1) nach Anspruch 1, wobei die Turbinenturmstützstruktur (29) einen Turbinenturmsockel (61) umfasst, mit dem ein Turmübergangsstück (67) und ein Turmbefestigungsflansch (69) verbunden ist.

3. Schwimmende Struktur (1) nach Anspruch 1 oder 2, wobei die Windturmstützstruktur (29) einen am Deck (39) des zentralen Auftriebskörpers (3) befestigten Windturmsockel (61), ein am Windturmsockel (61) befestigtes Turmübergangsstück (67) und einen am Turmübergangsstück (67) befestigten Turmbefestigungsflansch (69) umfasst.

4. Schwimmende Struktur (1) nach einem der Ansprüche 1, 2 oder 3, wobei mindestens eine Verstrebung (13a, 13b) zwischen der Turbinenturmstützstruktur (29) und mindestens einem der zentralen Auftriebskörper (3), dem ersten Auftriebskörper (5) oder dem zweiten Auftriebskörper (7) angebracht ist.

5. Schwimmende Struktur (1) nach einem der vorstehenden Ansprüche, wobei die Turbinenturmstützstruktur (29) einen Verstrebungsverbindungsflansch (71) aufweist und wobei eine vordere rohrförmige Verstrebung (13a) und eine hintere rohrförmige Verstrebung (13b) zwischen dem Verstrebungsverbindungsflansch (71) und dem ersten Auftriebskörper (5) angebracht sind und eine vordere rohrförmige Verstrebung (13a) und eine hintere rohrförmige Verstrebung (13b) zwischen dem Verstrebungsverbindungsflansch (71) und dem zweiten Auftriebskörper (7) angebracht sind, wobei, wenn die schwimmende Struktur (1) zum Zweck der Erleichterung des Betriebs der Windturbine (6) verankert ist, die vorderen rohrförmigen Streben (13a) und die hinteren rohrförmigen Streben (13b) oberhalb der Wasserlinie angeordnet sind.

6. Schwimmende Struktur (1) nach einem der vorstehenden Ansprüche, wobei die Verstrebungsanordnung (9) mindestens eine Querstrebe (105, 107), die zwischen dem ersten Auftriebskörper (5) und dem zentralen Auftriebskörper (3) angebracht ist, und mindestens eine Querstrebe (105, 107), die zwischen dem zweiten Auftriebskörper (5) und dem zentralen Auftriebskörper (3) angebracht ist, umfasst, wobei, wenn die schwimmende Struktur (1) zum Zweck der Erleichterung des Betriebs der Windturbine (6) verankert ist, die Querstreben (105, 107) unterhalb der Wasserlinie angeordnet sind.

7. Schwimmende Struktur (1) nach einem der vorstehenden Ansprüche, wobei der zentrale Auftriebskörper (3) eine Kielplatte (55), der erste Auftriebskörper (5) eine Kielplatte (93) und der zweite Auftriebskörper (7) eine Kielplatte (93) aufweist, und wobei das Deck (77) des Vorschiffs (46), das Deck (95) des ersten Auftriebskörpers (5) und das Deck (95) des zweiten Auftriebskörpers (7) alle auf gleicher Höhe liegen.

8. Schwimmende Struktur (1) nach einem der vorstehenden Ansprüche, wobei der zentrale Auftriebskörper (3) einen vorderen Teil (52) und einen hinteren Teil (54) aufweist, die an einer Verbindungsstelle (56) miteinander verbunden sind, und wobei an der Verbindungsstelle (56) zwischen dem vorderen Teil (52) und dem hinteren Teil (54) ein Fertigungsbogen vorgesehen ist.

9. Schwimmende Struktur (1) nach einem der vorstehenden Ansprüche, wobei das Vorschiff (46) am Bug (17) des zentralen Auftriebskörpers (3) angeordnet ist und die Verankerungsbefestigung (15) an dem vorderen Teil des Vorschiffs (46) vor dem Bug (17) angebracht ist.

10. Schwimmende Struktur (1) nach einem der vorstehenden Ansprüche, wobei die Verankerungsbefestigung (15) eine Turmverankerung (15) ist, die einen oberen Ausleger (79), der am Vorschiff (46) befestigt ist und ein oberes Zapfenlager (85) aufweist, einen unteren Ausleger (81), der am Bug (17) des mittleren Auftriebskörpers (3) befestigt ist und ein unteres Zapfenlager (87) aufweist, eine im wesentlichen vertikale Turmwelle (83), die zwischen dem oberen Zapfenlager (85) und dem unteren Zapfenlager (87) verläuft, und einen Kettentisch (91), der am unteren Ende der Turmwelle (83) unterhalb des unteren Zapfenlagers (87) befestigt ist.

11. Schwimmende Struktur (1) nach einem der vorstehenden Ansprüche, wobei der zentrale Auftriebskörper (3) ein Deck (39), der erste Auftriebskörper (5) ein Deck (95), der zweite Auftriebskörper ein Deck (95) und das Vorschiff (46) ein Deck (77) aufweist und jedes der vier Decks (39, 95, 77) so angeordnet ist, dass, wenn die schwimmende Struktur (1) zum Zweck der Erleichterung des Betriebs der Windturbine (6) verankert ist, die schwimmende Struktur (1) mit Ballast versehen werden kann, sodass sich das obere Deck (39) des zentralen Auftriebskörpers unterhalb der Wasserlinie befindet und die anderen oberen Decks (39, 95, 77) sich oberhalb der Wasserlinie befinden.

12. Schwimmende Struktur (1) nach einem der vorstehenden Ansprüche, wobei die Turbinenturmstützstruktur (29) im hinteren Drittel des zentralen Auftriebskörpers (3) angeordnet ist.

13. Schwimmende Struktur (1) nach einem der vorstehenden Ansprüche, umfassend eine untere hintere Unterbaugruppe (121), die an einer oberen hinteren Unterbaugruppe (123) befestigt ist, die wiederum an einer vorderen Unterbaugruppe (125) befestigt ist, wobei die untere hintere Unterbaugruppe (121) einen hinteren Teil (54) des zentralen Auftriebskörpers, den unteren Teil (99) des ersten Auftriebskörpers (5) und den unteren Teil (99) des zweiten Auftriebskörpers (7) umfasst, wobei die obere hintere Unterbaugruppe (123) den oberen Teil (97) des ersten Auftriebskörpers (5) und den oberen Teil (97) des zweiten Auftriebskörpers (7) und mindestens einen Teil der Turbinenturmstützstruktur (29) umfasst, und die vordere Unterbaugruppe (125) einen vorderen Teil (52) des zentralen Auftriebskörpers (3), das Vorschiff (46) und die Verankerungsbefestigung (15) umfasst.

14. Schwimmende Struktur (1) nach einem der vorstehenden Ansprüche, wobei das Vorschiff (46) ein Auftriebskörper ist.

15. Schwimmende Struktur (1) nach einem der vorstehenden Ansprüche, ferner umfassend eine Windturbine (6) mit horizontaler Achse, die von einem Windturbinenturm (27) gestützt wird, der an der Turbinenturmstützstruktur (29) befestigt ist.

## Revendications

1. Structure flottante (1) permettant de supporter une éolienne à axe horizontal (6) reposant sur une tour d'éolienne (27), la structure flottante (1) comprenant un corps flottant central (3), un premier corps flottant (5) situé sur un côté du corps flottant central (3) et un second corps flottant (7) situé sur l'autre côté du corps flottant central (3), dans laquelle au moins une partie du corps flottant central (3) est intercalée entre le premier corps flottant (5) et le second corps flottant (7), un agencement de contreventement (9) qui relie le premier corps flottant (5) au corps flottant central (3) et qui relie le second corps flottant (7) au corps flottant central (3), dans laquelle l'agencement de contreventement (9) agit pour maintenir le premier corps flottant (5) et le second corps flottant (7) à distance du corps flottant central (3) afin de créer un passage d'écoulement entre chacun parmi le premier corps flottant (5) et le second corps flottant (7) et le corps flottant central (3), une structure de support de tour de turbine (29) qui est située à l'intérieur de la moitié arrière de la longueur de la structure flottante (1), et un gaillard (46) situé au niveau de l'extrémité avant du corps flottant central (3), dans laquelle un moins une partie de chacun parmi le premier corps flottant (5), le second corps flottant (7) et le gaillard (46) s'étend au-dessus du corps flottant central (3), le corps flottant central (3) comprenant en outre une attache d'amarrage (15) qui est située à l'intérieur de la moitié avant de la longueur de la structure flottante (1) et qui peut être attachée à un amarrage géostationnaire, dans laquelle, pendant l'utilisation, le corps flottant central (3), le premier corps flottant (5), le second corps flottant (7) et le gaillard (46) peuvent être abaissés ou relevés par rapport à la ligne de flottaison et, dans laquelle, lorsque la structure flottante (1) est amarrée pour faciliter le fonctionnement de l'éolienne (6), le corps flottant central (3) est situé en-dessous de la ligne de flottaison et la structure de support de la tour (29) et au moins une partie de chacun parmi le gaillard (46), le premier corps flottant (5) et le second corps flottant (7) est située au-dessus de la ligne de flottaison.

2. Structure flottante (1) selon la revendication 1, dans laquelle la structure de support de la tour de turbine (29) comprend un socle de tour de turbine (61) auquel sont reliées une pièce de transition de tour (67) et une bride de fixation de tour (69).

3. Structure flottante (1) selon la revendication 1 ou la revendication 2, dans laquelle la structure de support de la tour d'éolienne (29) comprend un socle de tour d'éolienne (61) fixé au pont (39) du corps flottant central (3), une pièce de transition de tour (67) fixée au socle de tour de turbine (61) et une bride de fixation de tour (69) fixée à la pièce de transition de tour (67).

4. Structure flottante (1) selon l'une quelconque des revendications 1, 2 ou 3, dans laquelle au moins un renfort (13a, 13b) est fixé entre la structure de support de la tour de turbine (29) et au moins l'un parmi le corps flottant central (3), le premier corps flottant (5) ou le second corps flottant (7).

5. Structure flottante (1) selon l'une quelconque revendication précédente, dans laquelle la structure de support de tour de turbine (29) comprend une bride de raccordement pour renfort (71) et dans laquelle un renfort tubulaire avant (13a) et un renfort tubulaire arrière(13b) sont fixés entre la bride de raccordement pour renfort (71) et le premier corps flottant (5) et un renfort tubulaire avant (13a) et un renfort tubulaire arrière (13b) sont fixés entre la bride de raccordement pour renfort (71) et le second corps flottant (7), dans laquelle, lorsque la structure flottante (1) est amarrée pour faciliter le fonctionnement de l'éolienne (6), les renforts tubulaires avant (13a) et les renforts tubulaires arrière (13b) sont situés au-dessus de la ligne de flottaison.

6. Structure flottante (1) selon l'une quelconque revendication précédente, dans laquelle l'agencement de contreventement (9) comprend au moins une entretoise (105, 107) qui est fixée entre le premier corps flottant (5) et le corps flottant central (3) et au moins une entretoise (105, 107) qui est fixée entre le second corps flottant (5) et le corps flottant central (3), dans laquelle lorsque la structure flottante (1) est amarrée pour faciliter le fonctionnement de l'éolienne (6), les entretoises (105, 107) sont situées en-dessous de la ligne de flottaison.

7. Structure flottante (1) selon l'une quelconque revendication précédente, dans laquelle le corps flottant central (3) présente une tôle de quille (55), le premier corps flottant (5) présente une tôle de quille (93) et le second corps flottant (7) présente une tôle de quille (93), et dans laquelle le pont (77) du gaillard (46), le pont (95) du premier corps flottant (5) et le pont (95) du second corps flottant (7) sont tous de niveau l'un par rapport à l'autre.

8. Structure flottante (1) selon l'une quelconque revendication précédente, dans laquelle le corps flottant central (3) a une partie avant (52) et une partie arrière (54) reliées l'une à l'autre au niveau d'une jonction (56) et dans laquelle une arche de fabrication est prévue au niveau de la jonction (56) entre la partie avant (52) et la partie arrière (54).

9. Structure flottante (1) selon l'une quelconque revendication précédente, dans laquelle le gaillard (46) est situé au niveau de la proue (17) du corps flottant central (3) et l'attache d'amarrage (15) est fixée à la partie avant du gaillard (46) à l'avant de la proue (17).

10. Structure flottante (1) selon l'une quelconque revendication précédente, dans laquelle l'attache d'amarrage (15) est une tourelle d'amarrage (15) présentant un porte-à-faux supérieur (79) fixé au gaillard (46) et présentant un palier lisse supérieur (85), un porte-à-faux inférieur (81) fixé à la proue (17) du corps flottant central (3) et présentant un palier lisse inférieur (87), un arbre de tourelle sensiblement vertical (83) s'étendant entre le palier lisse supérieur (85) et le palier lisse inférieur (87) et une table à chaîne (91) fixée à l'extrémité inférieure de l'arbre de tourelle (83) en-dessous du palier lisse inférieur (87).

11. Structure flottante (1) selon l'une quelconque revendication précédente, dans laquelle le corps flottant central (3) a un pont (39), le premier corps flottant (5) a un pont (95), le second corps flottant a un pont (95) et le gaillard (46) a un pont (77) et chacun des quatre ponts (39, 95, 77) est agencé de telle sorte que, lorsque la structure flottante (1) est amarrée pour faciliter le fonctionnement de l'éolienne (6), la structure flottante (1) peut être lestée de sorte que le pont supérieur (39) du corps flottant central soit situé en-dessous de la ligne de flottaison et que les autres ponts supérieurs (39, 95, 77) soient situés au-dessus de la ligne de flottaison.

12. Structure flottante (1) selon l'une quelconque des revendications précédentes, dans laquelle la structure de support de tour de turbine (29) est située dans le tiers arrière du corps flottant central (3).

13. Structure flottante (1) selon l'une quelconque des revendications précédentes, comprenant un sous-ensemble inférieur arrière (121) fixé à un sous-ensemble supérieur arrière (123), qui est lui-même fixé à un sous-ensemble avant (125), dans lequel le sous-ensemble inférieur arrière (121) comprend une partie arrière (54) du corps flottant central, la partie inférieure (99) du premier corps flottant (5) et la partie inférieure (99) du second corps flottant (7), dans laquelle le sous-ensemble supérieur arrière (123) comprend la partie supérieure (97) du premier corps flottant (5) et la partie supérieure (97) du second corps flottant (7), et au moins une partie de la structure de support de la tour de turbine (29), et le sous-ensemble avant (125) comprend une partie avant (52) du corps flottant central (3), le gaillard (46) et l'attache d'amarrage (15).

14. Structure flottante (1) selon l'une quelconque des revendications précédentes, dans laquelle le gaillard (46) est un corps flottant.

15. Structure flottante (1) selon l'une quelconque des revendications précédentes, comprenant en outre une éolienne à axe horizontal (6) reposant sur une tour d'éolienne (27) qui est fixée à la structure de support de la tour de turbine (29).
